Europäisches Patentamt

European Patent Office

Office européen des brevets

(11) Numéro de publication : **0 237 369 B1**

# (12) FASCICULE DE BREVET EUROPEEN

(45) Date de publication du fascicule du brevet :
**15.01.92 Bulletin 92/03**

(51) Int. Cl.$^5$ : **H02J 9/06, G06F 1/00, H02M 5/451**

(21) Numéro de dépôt : **87400212.4**

(22) Date de dépôt : **30.01.87**

(54) Appareil d'alimentation électrique à sortie de tension alternative.

(30) Priorité : **06.02.86 FR 8601623**
**15.04.86 FR 8605345**

(43) Date de publication de la demande :
**16.09.87 Bulletin 87/38**

(45) Mention de la délivrance du brevet :
**15.01.92 Bulletin 92/03**

(84) Etats contractants désignés :
**AT BE DE ES GB IT NL SE**

(56) Documents cités :
**EP-A- 0 165 898**
**EP-A- 0 169 756**

(56) Documents cités :
**WO-A-85/01157**
**REVUE GENERALE DE L'ELECTRICITE, vol. 81, no. 9, septembre 1972, pages 558-561, Paris, FR; M. PIERRE: "L'alimentation électrique des ordinateurs"**

(73) Titulaire : **SERRAS-PAULET, Edouard**
**38bis Boulevard d'Argenson**
**F-92200 Neuilly Sur Seine (FR)**

(72) Inventeur : **SERRAS-PAULET, Edouard**
**38bis Boulevard d'Argenson**
**F-92200 Neuilly Sur Seine (FR)**

(74) Mandataire : **CABINET BONNET-THIRION**
**95 Boulevard Beaumarchais**
**F-75003 Paris (FR)**

## Description

L'invention se rapporte à un appareil d'alimentation électrique à sortie alternative, principalement destiné à l'alimentation d'équipements informatiques et/ou de systèmes d'acquisition et de traitement de signaux de faible niveau, nécessitant notamment une source d'alimentation ne générant pas de perturbations rayonnées ou conduites.

L'invention vise plus particulièrement un tel appareil susceptible de constituer une source d'alimentation présentant un bon rendement et qui soit stable et/ou secourue au moins pour faire face aux microcoupures du réseau de distribution.

Il est souvent nécessaire d'intercaler un appareil d'alimentation à sortie de tension alternative entre le réseau de distribution et certains systèmes tels que des équipements informatiques et/ou des chaînes d'acquisition et de traitement de signaux de mesure de faibles niveaux, pour éviter que le fonctionnement de tels systèmes soit perturbé par les imperfections du réseau, notamment les variations de tension et/ou les coupures brèves ou prolongées. Les qualités que l'on est en droit d'exiger d'un tel appareil d'alimentation sont les suivantes:

– Il ne doit pas être à l'origine de perturbations (bruits de commutation) rayonnées ou conduites, susceptibles d'induire dans les capteurs et leurs liaisons, des potentiels venant perturber les signaux faibles à mesurer et/ou traiter.

– Il doit pouvoir, au besoin, assurer une certaine stabilisation de la tension alternative délivrée, pour éviter que des équipements sensibles soient soumis aux variations du réseau qui sont classiquement de ± 10% par rapport à la tension nominale.

– Il doit pouvoir faire face à des coupures de réseau, notamment au moins les coupures brèves ou microcoupures (jusqu'à 50ms) relativement fréquentes et, si possible, les coupures prolongées (plus rares) pouvant atteindre quelques minutes voire quelques heures.

– Il doit assurer le cas échéant, l'isolement galvanique entre le réseau et le circuit d'utilisation.

– Il doit avoir de préférence le meilleur rendement possible.

Les systèmes connus réunissent rarement toutes ces qualités.

On connaît par exemple les appareils faisant appel à des transformateurs du type "ferro-résonnant". Ils assurent une stabilisation médiocre de la tension (typiquement ± 5% pour une variation de ± 10% en amont). La réserve d'énergie susceptible de faire face aux microcoupures est fournie par un circuit résonnant formé d'une inductance couplée au circuit magnétique et d'un condensateur. En revanche, ces systèmes présentent des défauts importants comme par exemple une mauvaise réponse dynamique sur un impact de charge et une variation importante de la tension de sortie en fonction de la variation de fréquence du réseau. Pour cette raison, ils ne sont généralement pas utilisables sur des réseaux de fréquences différentes. Ils sont lourds, encombrants et obsolètes. Des perturbations radio-électriques sont à craindre, provoquées par le courant de saturation de l'élément magnétique. Enfin et surtout, ils ne peuvent faire face à des coupures de réseau prolongées nécessitant l'utilisation d'un accumulateur électrochimique.

Lorsqu'une autonomie importante est nécessaire, on fait souvent appel à un onduleur alimenté par un redresseur et à un accumulateur électrochimique, de capacité convenable, intercalé en parallèle entre le redresseur et les bornes d'alimentation de l'onduleur. Ce dernier fonctionne donc à partir d'une tension continue filtrée par l'accumulateur lui-même. L'onduleur, chargé de restituer une tension sinusoïdale à partir d'une tension continue est souvent du type "à modulation de largeur d'impulsion", à transistors ou thyristors, fonctionnant à des fréquences élevées, ce qui rend leur exploitation délicate aux températures extrêmes. Les commutations des semi-conducteurs qu'ils comportent créent souvent des perturbations électriques qui rendent leur emploi difficile au voisinage d'appareils de mesure sensibles.

Pour améliorer le rendement, et réduire l'encombrement, on a aussi proposé d'utiliser un onduleur à découpage fonctionnement en haute-tension, sans transformateur et relié, en amont, d'une part, à un redresseur à découpage relié au réseau de distribution et fournissant une haute-tension continue et, d'autre part, à un convertisseur continu-continu alimenté par un accumulateur électrochimique, venant se substituer au réseau en cas de défaillance de celui-ci. Le convertisseur est en quelque sorte connecté en parallèle à la sortie du redresseur, l'accumulateur étant par ailleurs relié à un chargeur dimensionné seulement pour assurer sa recharge. Un tel système est peu fiable en raison du grand nombre de circuits à découpage. Les perturbations électriques sont importantes ou difficiles à maîtriser. Ce principe est difficile à mettre en oeuvre lorsque de fortes puissances sont en jeu.

Un autre concept connu consiste à utiliser normalement le réseau de distribution et à lui substituer rapidement, par commutation, une source de secours en cas de coupure. Cette commutation peut se faire par le jeu de contacteurs statiques (thyristors) commutant sur la charge un onduleur fonctionnant à vide tant que le réseau est présent. L'onduleur est alimenté par une batterie reliée en permanence à un chargeur. Avec un tel système, le rendement est bon en fonctionnement sur secteur et l'onduleur peut être d'encombrement réduit puisqu'il n'est utilisé que pendant la durée d'une défaillance du réseau. Cependant, une perturbation est inévitable au moment de la commutation des contacteurs statiques. Habituellement, il n'y a pas d'isolement par rapport au réseau et il n'est pas possible de stabiliser la tension d'utilisation. Certains de ces inconvénients peuvent être évités en combinant à un tel système, un onduleur ferro-résonnant mais dans ce cas, on retrouve tous les inconvénients mentionnés plus haut, comme par exemple, la variation de la tension de sortie en fonction de la fréquence et/ou la charge et une mauvaise réponse dynamique.

par ailleurs, le document de brevet européen N° 169 756 décrit une alimentation secourue à onduleur dans laquelle un hacheur-survolteur est intercalé entre le redresseur et ledit onduleur. Le hacheur-survolteur est piloté de façon à délivrer à sa sortie, c'est-à-dire à l'entrée de l'onduleur, une tension continue d'amplitude sensiblement constante. En outre, le document de brevet européen N° 165 898 décrit un autre type d'alimentation stabilisée à onduleur dans laquelle la commande de l'onduleur est assurée par des moyens délivrant une tension ondulée de référence synchrone et en phase avec la tension délivrée par le réseau de distribution. L'onduleur est néanmoins alimenté par une tension continue délivrée par un redresseur branché sur le réseau et filtrée au moyen de condensateurs.

L'invention réunit la plupart des avantages des différents systèmes connus décrits ci-dessus, tout en évitant leurs principaux inconvénients. Le but premier de l'invention est de proposer un appareil d'alimentation électrique à sortie de tension alternative possédant à la fois un excellent rendement et un faible niveau de perturbations électriques (rayonnées ou conduites) tout en se prêtant, d'autre part, à une régulation efficace de la tension de sortie et/ou à l'adjonction d'une source d'énergie auxiliaire susceptible de se substituer au réseau en cas de défaillance de celui-ci.

Dans cet esprit, l'invention concerne en premier lieu un appareil d'alimentation électrique à sortie de tension alternative, du type comportant un redresseur connecté pour être alimenté par un réseau de distribution et délivrer ainsi à sa sortie une tension redressée ondulée, caractérisé en ce que ledit redresseur est connecté sans moyens de filtrage à des bornes d'alimentation d'un amplificateur-onduleur et en ce qu'une entrée de commande de cet amplificateur-onduleur est reliée à un moyen générateur d'une tension ondulée synchrone et en phase avec la tension délivrée par ledit réseau de distribution.

par "amplificateur-onduleur" on entend un type particulier d'onduleur comportant, d'une part, un étage d'amplification fonctionnant en classe B (ou éventuellement en classe C, comme on le verra plus loin) chargé essentiellement d'élaborer une tension de sortie ondulée en réponse à un signal appliqué à son entrée de commande ou de transmettre (dans le cas du fonctionnement en classe C) la tension délivrée par le redresseur, et d'autre part, un moyen susceptible de restituer une tension alternative à partir de la forme d'onde délivrée par ledit étage d'amplification. Dans le cas où une régulation de la tension alternative de sortie est souhaitée, on utilisera plus particulièrement un étage d'amplification fonctionnant en classe B et chargé de délivrer à sa sortie, une tension ondulée formée d'une succession d'"arches de sinusoïde" de même polarité. Le plus souvent, un transformateur fera alors office de moyen susceptible de restituer une tension alternative sinusoïdale à partir desdites arches de sinusoïde.

Avec un tel agencement, et selon une caractéristique importante de l'invention, le rendement est excellent (supérieur à 75%) car les pertes dans l'amplificateur-onduleur sont fonction de la différence de tension entre l'onde délivrée par le redresseur et celle (synchrone et en phase) délivrée par l'étage d'amplification. Une simple boucle de régulation, classique, entre la sortie de l'amplificateur-onduleur et un comparateur connecté à son entrée permettra, si nécessaire, d'obtenir la régulation de la tension sinusoïdale de sortie.

En revanche, si la régulation de la tension de sortie n'est pas essentielle pour l'application envisagée, on pourra encore améliorer le rendement en modifiant l'étage d'amplification pour le faire fonctionner en classe C. Dans ce cas, les deux branches de l'amplificateur seront assujetties à fonctionner en tout ou rien et non pas en linéaire, de sorte que ledit étage d'amplification en classe C transmettra directement les "arches de sinusoïde" au transformateur charge de reconstituer une tension de sortie alternative sinusoïdale.

Dans les deux cas envisagés ci-dessus, l'amplificateur-onduleur pourra facilement être couplé à une source d'énergie électrique de secours, telle qu'un condensateur, au moins, (cas des microcoupures) ou un générateur électrochimique (pour faire face à des coupures prolongées).

Dans ces esprit, l'appareil selon la définition qui précède est en outre caractérisé en ce qu'un amplificateur auxiliaire connecté pour être alimenté par des moyens de stockage d'énergie électrique, a sa sortie reliée aux bornes d'alimentation de l'amplificateur-onduleur, par exemple par l'intermédiaire d'un élément à conduction unidirectionnelle telle qu'une diode et que ledit amplificateur auxiliaire a son entrée de commande reliée à un moyen générateur d'une tension ondulée synchrone et en phase avec la tension délivrée par ledit réseau de distribution.

L'invention sera mieux comprise et d'autres avantages de celle-ci apparaîtront plus clairement à la lumière de la description qui va suivre de plusieurs modes de réalisation possibles d'un appareil d'alimentation électrique conforme à son principe, donnée uniquement à titre d'exemple et faite en référence aux dessins annexés dans lesquels:

– la figure 1 est un schéma-bloc d'un mode de réalisation possible d'un appareil d'alimentation électrique conforme à l'invention;

– la figure 2 est un schéma illustrant partiellement un mode de réalisation possible de l'amplificateur-onduleur de la figure 1;

– la figure 3 est une variante de la figure 2; et

– les figures 4a et 4b sont deux chronogrammes illustrant l'amélioration obtenue par la mise en oeuvre du principe de l'invention;

– la figure 5 est un schéma-bloc d'une variante de la figure 1.

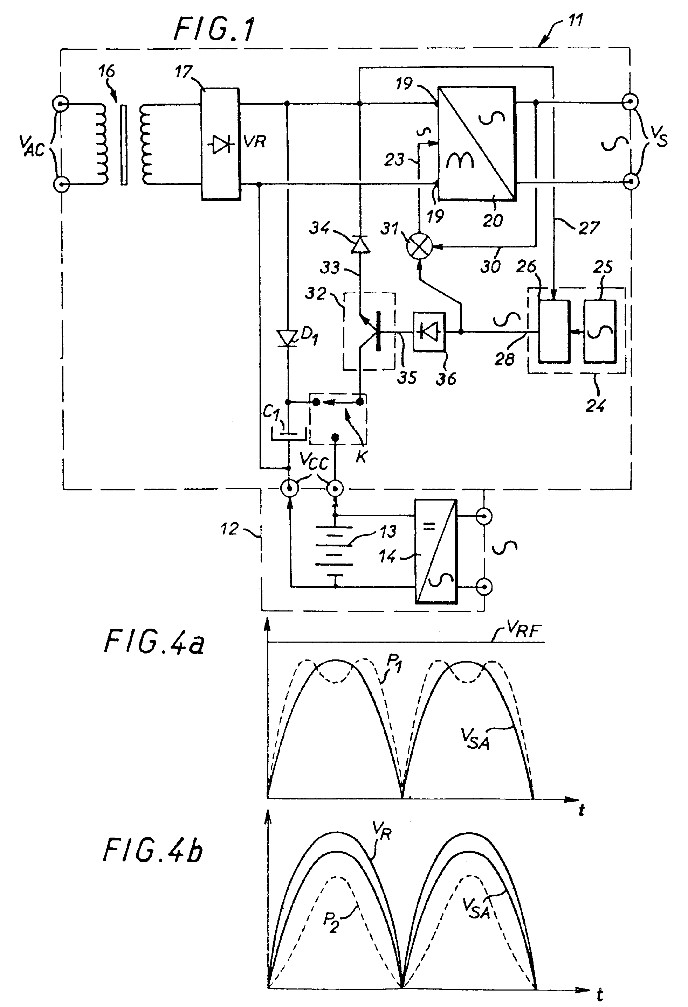

En se reportant au schéma, et notamment à la figure 1, on a représenté un appareil d'alimentation électrique 11, secouru contre les microcoupures du réseau de distribution de courant alternatif connecté aux bornes d'accès $V_{AC}$. Eventuellement l'appareil est associé à une source de tension continue 12 susceptible d'être connectée à ses bornes d'accès $V_{CC}$, pour lui conférer une autonomie plus importante. Cette source de tension continue 12 est simplement constituée d'un accumulateur électrochimique 13 dont les bornes sont raccordables aux bornes $V_{CC}$ et d'un chargeur 14 dont la sortie est connectée à l'accumulateur. Ce chargeur est alimenté par le réseau de distribution mais uniquement dimensionné pour assurer la charge de l'accumulateur.

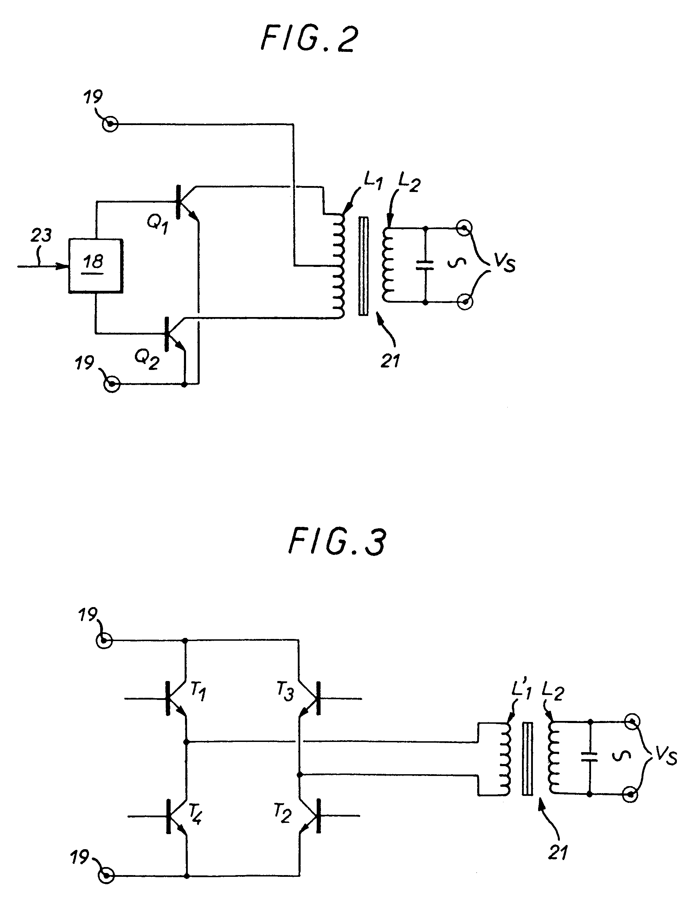

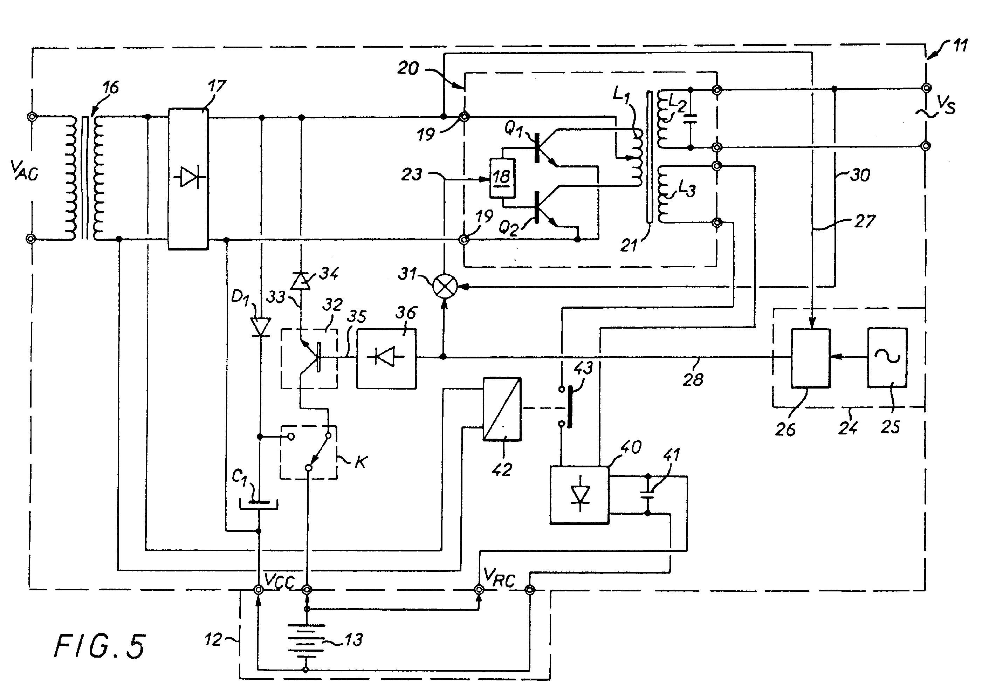

L'appareil d'alimentation 11 comporte quant à lui, un transformateur 16, abaisseur de tension, dont le primaire est relié aux bornes $V_{AC}$ et dont le secondaire est connecté à un redresseur 17. La sortie de ce dernier est directement connectée aux bornes d'alimentation 19 d'un amplificateur-onduleur 20. La sortie de l'amplificateur-onduleur 20 est connectée à des bornes de sortie $V_S$ délivrant une tension d'utilisation alternative, sinusoïdale. Il est à noter, à ce stade de la description, que contrairement aux dispositifs connus qui comportent des condensateurs (ou un accumulateur électrochimique) connectés en parallèle à la sortie du redresseur 17 pour obtenir une tension continue d'alimentation de l'onduleur, aussi rigoureusement filtrée que possible (du type $V_{RF}$, figure 4a), l'amplificateur-onduleur 20 est directement alimenté par des "arches de sinusoïde" (du type $V_R$, figure 4b). Cette particularité importante et spécifique de l'invention est l'une des raisons du bon rendement de l'appareil malgré l'utilisation d'un étage d'amplification linéaire, fonctionnant en classe B, dans l'amplificateur-onduleur 20. Ce dernier répond à la définition donnée plus haut. La figure 2 montre par exemple, un étage de puissance du type "Push-Pull" à deux transistors $Q_1$, $Q_2$. Les collecteurs de ces transistors sont chargés par l'enroulement primaire $L_1$ d'un transformateur de sortie 21. Cet enroulement primaire $L_1$ comporte un point milieu connecté à l'une des bornes d'alimentation 19. L'enroulement secondaire $L_2$ du transformateur 21 est connecté aux bornes de sortie $V_S$. Un condensateur est monté en parallèle sur cet enroulement.

Un circuit de pilotage 18 (figures 2 et 5), dont la conception est à la portée de l'homme du métier, comporte une entrée de commande 23 qui constitue aussi l'entrée de commande de l'amplificateur-onduleur et est connecté pour piloter les bases des transistors $Q_1$, $Q_2$ selon un régime de fonctionnement de type classe B. Ainsi, l'étage de puissance, polarisé en classe B, peut être directement piloté par une tension ondulée, alternative, appliquée à son entrée de commande 23. Cette tension ondulée est élaborée à partir d'un moyen générateur 24 synchronisé à la tension du réseau de distribution. Pour ce faire, il comporte un oscillateur pilote 25 fonctionnant à la même fréquence que le réseau de distribution et un circuit de synchronisation 26 relié au redresseur ou au réseau de distribution par une liaison 27. La conception de ce moyen générateur synchrone est à la portée de l'homme du métier. Ainsi, tant que le réseau de distribution fonctionne normalement, la tension disponible à la sortie 28 du moyen générateur 24 est synchrone et en phase avec celle du réseau de distribution. Si la tension du réseau vient à disparaître, l'oscillateur 25 continue à fonctionner à la même fréquence et, dès réapparition de la tension de réseau, le circuit de synchronisation 26 agit pour annuler un éventuel écart de phase entre le signal disponible à la sortie 28 et la tension du réseau.

Par ailleurs, l'amplificateur-onduleur 20 comporte ou est associé à des moyens de contre-réaction, symbolisés ici par une boucle de contre-réaction 30 établie entre la sortie de l'amplificateur-onduleur et une entrée d'un comparateur différentiel 31. L'autre entrée de ce comparateur est reliée à la sortie 28 tandis que sa propre sortie est connectée à l'entrée de commande 23 de l'amplificateur-onduleur 20. Ces moyens de contre-réaction, classiques, assurent une régulation de la tension alternative disponible aux bornes de sortie $V_S$. Cette dernière est donc notamment indépendante des variations de la tension du réseau de distribution qui se traduisent par des variations d'amplitude des "arches de sinusoïde" $V_R$ (figure 4b) délivrées par le redresseur 17.

En outre, pour pallier une éventuelle défaillance du réseau de distribution, un amplificateur auxiliaire 32 (symbolisé ici par un transistor fonctionnant en régime linéaire) est connecté pour être alimenté par des moyens de stockage d'énergie électrique constitués par un condensateur $C_1$ et/ou l'accumulateur 13. La sortie 33 de cet amplificateur auxiliaire est reliée aux bornes d'alimentation 19 de l'amplificateur-onduleur 20 par l'intermédiaire d'une diode 34. Les moyens de stockage d'énergie électrique sont au moins constitués par le condensateur $C_1$ qui a une capacité suffisante pour alimenter l'amplificateur auxiliaire 32 (et par conséquent l'amplificateur-onduleur 20 en charge) pendant une microcoupure du réseau de distribution. Le condensateur est normalement maintenu chargé par un circuit de charge relié au réseau et symbolisé ici par une diode $D_1$ connectée entra la sortie du redresseur 17 et le condensateur $C_1$. Un contacteur K est interconnecté entre l'amplificateur 32, d'une part, et le condensateur $C_1$ et l'accumulateur 13 (éventuellement), d'autre part. Pour une position du contacteur K, l'amplificateur 32 est alimenté par le condensateur $C_1$ et la tension sinusoïdale disponible à la sortie $V_S$ est débarrassée de toutes les microcoupures du réseau de distribution. Si la source 12 est connectée aux bornes $V_{CC}$, le contacteur K est basculé dans son autre position et l'installation acquiert alors une autonomie plus longue qui dépend de la capacité de l'accumulateur 13.

L'entrée de commande 35 de l'amplificateur auxiliaire 32 (lequel fonctionne aussi en classe D) reçoit les signaux disponibles à la sortie 28 par l'intermédiaire d'un redresseur 36. Dans ces conditions, l'amplificateur auxiliaire (qui n'est pas ici du type "Push Pull") reçoit à son entrée des arches de sinusoïde semblables à celles qui sont délivrées par le redresseur 17, synchrones et en phase avec celles-ci. De telles "arches" amplifiées sont donc disponibles à la sortie 33. Cependant, le gain de l'amplificateur auxiliaire 32 est réglé pour que les "arches" qu'il délivre aient une tension légèrement inférieure à la tension des "arches" délivrées par le redresseur 17 lorsque le réseau délivre une tension sinusoïdale minimum (par exemple, la tension nominale -10%). Dans ces conditions, la diode 34 est normalement bloquée tant que le réseau de distribution fonctionne normalement et l'amplificateur auxiliaire 32 fonctionne à vide en consommant relativement peu d'énergie.

Par ailleurs, du fait que l'amplificateur-onduleur est directement alimenté par des "arches de sinusoïdes synchrones et en phase avec sa tension de pilotage, les pertes dans ce dernier sont très faibles.

La comparaison des figures 4a et 4b permet de comprendre pourquoi l'amplificateur-onduleur 20 fonctionne avec un excellent rendement. Sur les deux chronogrammes, on a représenté la forme d'onde $V_{SA}$ délivrée à la sortie de l'étage de puissance du circuit d'amplification de l'amplificateur-onduleur. Si la tension d'alimentation de celui-ci était une tension continue soigneusement filtrée $V_{RF}$ (figure 4a), les pertes dans l'amplificateur-onduleur seraient, à chaque instant, fonction de la différence de potentiel entre $V_{RF}$ et $V_{SA}$. Or, du fait que l'amplificateur-onduleur est directement alimenté par des "arches de sinusoïde" $V_R$ (figure 4b) synchrones et en phase avec $V_{SA}$, les pertes (toujours fonction à chaque instant de la différence de potentiel entre $V_R$ et $V_{SA}$) sont beaucoup plus faibles. Les courbes $P_1$ et $P_2$ en trait interrompu reportées sur les figures 4a et 4b illustrent respectivement les pertes, dans les deux cas, en supposant le courant sinusoïdal et en phase avec la tension.

Dans cette hypothèse, la réduction des pertes est supérieure à 50%. Il est aussi important de noter que si le courant et la tension sont déphasés, ce qui est généralement le cas, la réduction des pertes est encore supérieure. Ainsi, pour un déphasage de 45°, la réduction des pertes est de l'ordre de 65%.

Par ailleurs, le fonctionnement en cas de défaillance du réseau de distribution est le suivant. Si la source de tension continue 12 n'est pas raccordée, le contacteur K est placé dans une position telle que le condensateur $C_1$ soit en service. Dès que la tension $V_R$ passe en dessous d'un seuil bas prédéterminé, la diode 34 se débloque instantanément sans créer la moindre perturbation et l'amplificateur-onduleur 20 est alors alimenté par des "arches de sinusoïde" générées cette fois par l'amplificateur 32 lui-même alimenté par l'énergie électrique accumulée dans le condensateur $C_1$. Cet agencement suffit pour faire face aux microcoupures du réseau mais il est bien évident que le dispositif d'alimentation 11 ne peut être secouru pendant une période de temps plus longue que si la source de tension continue 12 est raccordée et que l'accumulateur 13 est substitué au condensateur $C_1$ par manoeuvre du commutateur K. Pendant une période de fonctionnement secouru, le rendement de l'ensemble est moins bon car l'amplificateur auxiliaire 32 fonctionne dans des conditions analogues à celles illustrées à la figure 4a mais cette chute de rendement n'est effective que pendant une très faible partie du temps d'utilisation. Pour éviter de surdimensionner l'amplificateur 32 et spécialement pour faire face à des périodes de fonctionnement autonome prolongées, on peut "répartir" la dissipation supplémentaire entre l'amplificateur auxiliaire 32 et l'amplificateur-onduleur 20. Il suffit de prévoir à l'entrée de l'amplificateur auxiliaire 32 un moyen propre à augmenter l'amplitude du signal de commande et par conséquent augmenter l'amplitude des "arches de sinusoïde" délivrées à la sortie 33. Ce moyen serait par exemple associé à un moyen de commutation, éventuellement temporisé, pour être mis en service lors d'une défaillance prolongée dudit réseau de distribution. Les pertes dans l'amplificateur 32 diminuent alors tandis que celles de l'amplificateur 20 augmentent légèrement.

La figure 3 illustre une variante possible de l'étage de puissance de l'amplificateur-onduleur 20. Cet étage d'amplification est toujours polarisé pour fonctionner en classe B mais il comprend cette fois un montage en pont de quatre transistors $T_1$, $T_2$, $T_3$, $T_4$, le primaire $L'_1$ du transformateur de sortie étant simplement connecté dans une diagonale de ce pont. Avec un tel montage, notamment, il est possible de fonctionner à partir d'un redresseur haute-tension directement connecté au réseau, c'est-à-dire de supprimer le transformateur d'isolement 16 de la figure 1. On doit alors (éventuellement) utiliser un accumulateur haute-tension (de l'ordre de 320 Volts) pour alimenter l'amplificateur auxiliaire. Un fonctionnement à partir d'un accumulateur basse-tension (48 Volts) est cependant possible si on prévoit deux enroulements primaires commutables définissant des rapports de transformation différents du transformateur de sortie 21. Il est à noter enfin, que ce type de montage permet de supprimer le transformateur de sortie moyennant quelques modifications dans le circuit de commande du montage en pont, ces modifications étant à la portée de l'homme du métier.

La transposition en triphasé ne pose aucun problème. Il suffit de tripler les circuits avec des oscillateurs pilotes convenablement déphasés les uns par rapport aux autres.

Enfin, comme mentionné ci-dessus, il est possible de polariser l'étage de puissance de l'amplificateur-onduleur 20 pour le faire fonctionner en classe C si la régulation de la tension de sortie $V_S$ n'est pas recherchée. Le dispositif gagne alors encore en rendement pendant les périodes de fonctionnement sur réseau et l'agencement conserve tout son intérêt pour l'adjonction des moyens décrits ci-dessus susceptibles de faire face à une défaillance du réseau.

Les avantages du système qui vient d'être décrit, sont nombreux. Les principaux sont l'excellent rendement et l'absence de parasites rayonnés ou conduits, dus à un fonctionnement linéaire excluant tout fonctionnement en commutation haute-fréquence. La durée de vie des transistors fonctionnant en linéaire, classe B, est très supérieure à celle des dispositifs de commutation statique généralement utilisés dans ce genre d'appareils. Outre la possibilité de supprimer certains des transformateurs décrits ci-dessus (voire tous) le dispositif de l'invention gagne encore en compacité par le fait que la tension redressée n'est pas filtrée par un groupement de condensateurs électrochimiques encombrants. La fiabilité s'en trouve encore améliorée. La possibilité de fonctionner sans accumulateur électrochimique (compensation des microcoupures seulement) donne à l'appareil de l'invention tous les avantages d'un régulateur ferrorésonnant sans aucun de ses inconvénients. En particulier, la réponse dynamique du système est excellente du fait du fonctionnement linéaire des circuits d'amplification de l'amplificateur-onduleur. L'appareil est apte à faire face à des surcharges momentanées très importantes par augmentation du nombre de transistors, en parallèle, des étages de puissance et/ou par temporisation du temps de réponse des circuits de limitation de courant de l'amplificateur. La tension de sortie ne varie pas en fonction de la fréquence du réseau et le même appareil peut, moyennant quelques modifications banales, être adapté pour fonctionner en liaison avec un réseau de distribution de fréquence quelconque, notamment 50Hz, 60Hz ou 400Hz. Enfin, en raison de l'absence de filtrage capacitif de la tension redressée, le facteur de forme du courant est sensiblement le même que celui qui est imposé par l'utilisateur. Autrement dit, l'appareil selon l'invention, n'introduit pas de cos ∅ entre le réseau de distribution et le réseau d'utilisation.

La variante de la figure 5, dans laquelle les éléments analogues à ceux de la figure 1 portent les mêmes références numériques, est notamment remarquable par un circuit de charge d'un accumulateur électrochimique et donc, particulièrement indiqué lorsque l'appareil est associé à une source de tension continue 12 susceptible d'être connectée à ses bornes $V_{CC}$ pour lui conférer une autonomie plus importante. Cette source de tension continue 12 est ici simplement constituée d'un accumulateur électrochimique 13 dont les pôles sont raccordables aux bornes $V_{CC}$ ainsi qu'à des bornes $V_{RC}$ constituant la sortie d'un circuit de recharge intégré à l'appareil 11, qui sera décrit plus loin. L'appareil 11 est, pour l'essentiel, identique à celui de la figure 1 mais le transformateur 21 comporte un enroulement secondaire auxiliaire $L_3$. Ainsi, les moyens de contreréaction mentionnés ci-dessus assurent aussi une régulation de la tension disponible aux bornes de cet enroulement $L_3$. De plus, l'appareil comporte un circuit de redressement 40 connecté à une sortie de tension alternative de l'amplificateur-onduleur 20, plus particulièrement ici constituée par les bornes de l'enroulement $L_3$. Ce circuit de redressement forme l'essentiel de moyens de recharge de l'accumulateur électrochimique 13. Sa sortie de tension redressée est filtrée par un condensateur 41 et connectée aux bornes $V_{RC}$. La régulation du courant de recharge est parfaitement maîtrisée du fait que a tension délivrée par l'enroulement $L_3$ est très stable puisqu'elle "bénéficie" de tous les circuits de régulation prévus pour stabiliser la tension $V_S$. Un moyen formant interrupteur commandé comporte un circuit de commande 42 connecté pour être sensible à la présence d'une tension délivrée par le réseau de distribution ou d'une tension dépendante de celle-ci. Ledit moyen formant interrupteur commandé est interconnecté en un point situé entre l'amplificateur-onduleur et les bornes de raccordement $V_{RC}$ pour interrompre la charge de l'accumulateur lorsque la tension du réseau de distribution tombe en dessous d'un seuil prédéterminé. Dans l'exemple non limitatif décrit, le moyen formant interrupteur commandé est un relais électromagnétique ou analogue dont un contact 43 est interconnecté en série dans la liaison entre l'enroulement $L_3$ et le redresseur 40. Le circuit de commande 42 précité est donc simplement l'enroulement de commande de ce relais, piloté par le réseau. Cet agencement permet d'interrompre la charge de l'accumulateur 13 lorsque celui-ci est appelé à alimenter l'amplificateur-onduleur 20, via l'amplificateur 32, lors d'une défaillance du réseau.

Il apparaît donc que l'appareil 11 qui vient d'être décrit se comporte comme un "conditionneur" de réseau, chargé de stabiliser la tension de ce réseau et muni d'au moins une partie des moyens nécessaires pour assurer la recharge de l'accumulateur 13. Il suffit pour cela de prévoir au minimum un enroulement auxiliaire tel que L₃, les autres éléments du réseau de recharge pouvant être placés à l'interieur de l'appareil 11 ou au contraire à l'intérieur du boîtier de la source de tension continue 12.

## Revendications

1. Appareil d'alimentation électrique à sortie de tension alternative, du type comportant un redresseur (17) connecté pour être alimenté par un réseau de distribution et délivrer ainsi à sa sortie une tension redressée ondulée, caractérisé en ce que ledit redresseur est connecté sans moyens de filtrage, à des bornes d'alimentation (19) d'un amplificateur-onduleur (20) et en ce qu'une entrée de commande (23) de cet amplificateur-onduleur est relié à un moyen générateur d'une tension ondulée (24) synchrone et en phase avec la tension délivrée par ledit réseau de distribution ($V_{AC}$).

2. Appareil d'alimentation électrique selon la revendication 1, caractérisé en ce que ledit amplificateur-onduleur (20) comporte ou est associé à des moyen de contre-réaction (30, 31) pour stabiliser sa tension de sortie au voisinage d'une valeur prédéterminée.

3. Appareil selon la revendication 1 ou 2, caractérisé en ce qu'un amplificateur auxiliaire (32) connecté pour être alimenté par des moyens de stockage d'énergie électrique ($C_1$, 12) a sa sortie reliée auxdites bornes d'alimentation (19), par exemple par l'intermédiaire d'un élément à conduction unidirectionnelle telle qu'une diode (34) et que ledit amplificateur auxiliaire a son entrée de commande reliée à un moyen générateur d'une tension ondulée (24) synchrone et en phase avec la tension délivrée par ledit réseau de distribution.

4. Appareil selon la revendication 3, caractérisé en ce que le moyen générateur pilotant ledit amplificateur-onduleur (20) est aussi le moyen générateur pilotant ledit amplificateur auxiliaire (32).

5. Appareil selon la revendication 4, caractérisé en ce que ledit moyen générateur comporte un oscillateur pilote (25) délivrant une tension ondulée semblable et de même fréquence que celle dudit réseau et un circuit de synchronisation (26) relié audit redresseur ou audit réseau.

6. Appareil selon l'une des revendications 3 à 5, caractérisé en ce que les moyens de stockage d'énergie électrigue précités comportent au moins un condensateur ($C_1$) de capacité suffisante pour alimenter ledit amplificateur auxiliaire pendant une coupure brève dudit réseau de distribution, ledit condensateur étant connecté à un circuit de charge ($D_1$) relié audit réseau.

7. Appareil selon l'une des revendications 3 à 6, caractérisé en ce que les moyens de stockage d'énergie électrigue précités comportent un accumulateur électrochimique (13) dimensionné pour alimenter ledit amplificateur auxiliaire (32) pendant une coupure prolongée dudit réseau de distribution.

8. Appareil selon l'une des revendications précédentes, caractérisé en ce que ledit amplificateur-onduleur (20) comporte un étage de puissance à transistors fonctionnant en classe B.

9. Appareil selon la revendication 8, caractérisé en ce que ledit amplificateur-onduleur comporte un transformateur connecté à la sortie dudit étage de puissance.

10. Appareil selon la revendication 9, caractérisé en ce que ledit transformateur comporte un enroulement primaire ($L_1$) à point milieu connecté à un étage de puissance à transistors du type "Push-Pull" ($Q_1, Q_2$).

11. Appareil selon la revendication 8 ou 9, caractérisé en ce que ledit amplificateur-onduleur (20) comporte un étage de puissance en pont de transistors fonctionnant en classe B (figure 3).

12. Appareil selon la revendication 1, caractérisé en ce que ledit amplificateur-onduleur (20) comporte un étage de puissance à transi:tors fonctionnant en classe C.

13. Appareil selon l'une des revendications 3 à 12, caractérisé en ce qu'il comporte un moyen propre à augmenter l'amplitude du signal de commande dudit amplificateur auxiliaire lors d'une défaillance dudit réseau de distribution.

14. Appareil d'alimentation électrique à sortie de tension alternative selon la revendication 7, caractérisé en ce qu'il comporte un circuit de redressement (40) connecté à une sortie de tension alternative ($L_3$) de l'amplificateur-onduleur (20) et formant au moins une partie de moyens de recharge d'un accumulateur électrochimique (13).

15. Appareil d'alimentation électrique selon la revendication 14, caractérisé en ce qu'il comporte un moyen formant interrupteur commandé dont un circuit de commande (42) est connecté pour être sensible à la présence d'une tension délivrée par ou dépendante du réseau de distribution et en ce que ce moyen formant interrupteur est interconnecté entre un point situé entre ledit amplificateur-onduleur (20) et les pôles dudit accumulateur électrochimique pour interrompre la charge de ce dernier lorsque ladite tension tombe'en dessous d'un seuil prédéterminé.

16. Appareil selon la revendication 15, caractérisé en ce que ledit moyen formant interrupteur commandé est un relais électromagnétique ou analogue dont un enroulement de commande (42) est relié pour être alimenté par la tension du réseau alternatif de distribution ou par une tension représentative de celle-ci et dont un contacteur (43) est interconnecté en série dans la liaison entre ladite sortie de tension alternative ($L_3$) et lesdits pôles.

17. Appareil d'alimentation électrique selon l'une des revendications 14 à 16 dans lequel ledit amplificateur-onduleur comporte un transformateur connecté à la sortie d'un étage de puissance à transistors fonctionnant en classe B, caractérisé en ce que la sortie de tension alternative précitée de l'amplificateur-onduleur (20) est constituée par les bornes l'un enroulement particulier ($L_3$) d'un transformateur de l'amplificateur-onduleur.

## Claims

1. An alternating voltage electrical power supply device of the kind comprising a rectifier (17) connected to be supplied by a mains supply and to produce a rectified output voltage including ripple, characterized in that the said rectifier is connected without filtering means to power supply terminals (19) of an amplifier-inverter (20) and in that a control input (23) of this amplifier-inverter is connected to a means for generating a voltage including ripple (24) synchronous and in phase with the voltage supplied by the said mains supply ($V_{AC}$).

2. An electrical power supply device according to claim 1, characterized in that the said amplifier-inverter (20) comprises or is associated with feedback means (30, 31) for stabilizing its output voltage close to a predetermined value.

3. A device according to claim 1 or 2, characterized in that the output of an auxiliary amplifier (32), connected to be supplied by electrical energy storage means ($C_1$, 12), is connected to the said power supply terminals (19), for example through the intermediary of a unidirectionally conductive element such as a diode (34), and the control input of the said auxiliary amplifier is connected to a means for generating a voltage including ripple (24) synchronous and in phase with the voltage supplied by the said mains supply.

4. A device according to claim 3, characterized in that the generating means controlling the said amplifier-inverter (20) is also the generating means controlling the said auxiliary amplifier (32).

5. A device according to claim 4, characterized in that the said generating means comprise a master oscillator (25) producing a voltage including ripple similar to and at the same frequency as the voltage of the said mains supply and a synchronization circuit (26) connected to the said rectifier or to the said mains supply.

6. A device according to any one of claims 3 to 5, characterized in that the aforementioned electrical energy storage means comprise at least one capacitor ($C_1$) having a capacitance sufficient to supply electrical energy to the said auxiliary amplifier during a short-term disconnection of the said mains supply, the said capacitor being connected to a charging circuit ($D_1$) connected to the said mains supply.

7. A device according to any one of claims 3 to 6, characterized in that the aforementioned electrical energy storage means comprise an electrochemical accumulator (13) of a size adapted to supply electrical energy to the said auxiliary amplifier (32) during a long-term disconnection of the said mains supply.

8. A device according to any one of the preceding claims, characterized in that the said amplifier-inverter (20) comprises a transistorized power amplifier stage operating in class B.

9. A device according to claim 8, characterized in that the said amplifier-inverter comprises a transformer connected to the output of the said power amplifier stage.

10. A device according to claim 9, characterized in that the said transformer comprises a centre-tapped primary winding ($L_1$) connected to a power amplifier stage of the push-pull type comprising transistors ($Q_1$, $Q_2$).

11. A device according to claim 8 or claim 9, characterized in that the said amplifier-inverter (20) comprises a bridged transistor power amplifier stage operating in class B (Figure 3).

12. A device according to claim 1, characterized in that the said amplifier-inverter (20) comprises a transistorized power amplifier stage operating in class C.

13. A device according to any one of claims 3 to 12, characterized in that it comprises means adapted to increase the amplitude of the control signal supplied to the said auxiliary amplifier during failure of the said mains supply.

14. An alternating voltage electrical power supply device according to claim 7, characterized in that it comprises a rectification circuit (40) connected to an alternating voltage output ($L_3$) of the amplifier-inverter (20) and forming at least part of means for recharging an electrochemical accumulator (13).

15. An electrical power supply device according to claim 14, characterized in that it comprises a controlled switching means, a control circuit (42) for which is connected to respond to the presence of a voltage supplied by or dependent on the mains supply and in that the switching means is connected to a point between the said amplifier-inverter (20) and the terminals of the said electrochemical accumulator so as to interrupt charging of the latter when the said voltage falls below a predetermined threshold.

16. A device according to claim 15, characterized in that the said controlled switching means is an electromagnetic relay or the like, a control winding (42) of which is connected so as to be supplied by the alternating mains supply voltage or by a voltage representative of the latter, and a switch contact (43) of which is connected in series in the connection between the said alternating voltage output ($L_3$) and the said terminals.

17. An electrical power supply device according to any one of claims 14 to 16, wherein the said amplifier-inverter comprises a transformer connected to the output of a transistorized power amplifier stage operating in class B, characterized in that the aforementioned alternating voltage output of the amplifier-inverter (20) is constituted by the terminals of a specific winding (L₃) of a transformer in the amplifier-inverter.

**Patentansprüche**

1. Elektrisches Speisegerät mit Wechselspannungsausgang, mit einem Gleichrichter (17), der so geschaltet ist, daß er von einem Versorgungsnetz gespeist wird und an seinem Ausgang eine gleichgerichtete wellenförmige Spannung liefert, dadurch gekennzeichnet, daß der Gleichrichter ohne Siebmittel an die Eingangsklemmen (19) eines Verstärkers-Wechselrichters (20) angeschlossen ist, und daß ein Steuerungseingang (23) dieses Verstärker-Wechselrichters mit einem Generatormittel (24) zur Erzeugung einer wellenförmigen Spannung verbunden ist, die synchron und in Phase mit der von dem Versorgungsnetz (V$_{AC}$) gelieferten Spannung ist.

2. Speisegerät nach Anspruch 1, dadurch gekennzeichnet, daß der Verstärker-Wechselrichter (20) Gegenkopplungsmittel (30, 31 ) aufweist oder solchen zugeordnet ist, um seine Ausgangsspannung in der Nähe eines vorgegebenen Wertes zu stabilisieren.

3. Speisegerät nach Anspruch 1 oder 2, dadurch gekennzeichnet, daß der Ausgang eines von elektrischen Energiespeichermitteln (C $_1$,12) gespeisten Hilfsverstärkers mit den genannten Eingangsklemmen (19) verbunden ist, beispielsweise über ein Einwegleitelement, wie eine Diode (34), und daß der Steuereingang des Hilfsverstärkers mit einem Generatormittel (24) zur Erzeugung einer wellenförmigen Spannung verbunden ist, die synchron und in Phase zu der von dem Versorgungsnetz gelieferten Spannung ist.

4. Speisegerät nach Anspruch 3, dadurch gekennzeichnet, daß das den Verstärker-Wechselrichter ansteuernde Generatormittel (20) auch das Generatormittel ist, das den Hilfsverstärker (32) ansteuert.

5. Speisegerät nach Anspruch 4, dadurch gekennzeichnet, daß das Generatormittel einen Pilotoszillator (25), der eine wellenförmige Spannung liefert, die ähnlich und gleichfrequent zu der Netzspannung ist, sowie eine Synchronisationsschaltung (26) aufweist, die mit dem Gleichrichter oder mit dem Netz verbunden ist.

6. Speisegerät nach einem der Ansprüche 3 bis 5, dadurch gekennzeichnet, daß die vorgenannten elektrischen Energiespeichermittel mindestens einen Kondensator (C₁) umfassen, dessen Kapazität ausreicht, um den Hilfsverstärker während eines kurzen Versorgungsnetzausfalles zu speisen, welcher Kondensator an eine mit dem genannten Netz verbundene Ladeschaltung (D₁) angeschlossen ist.

7. Speisegerät nach einem der Ansprüche 3 bis 6, dadurch gekennzeichnet, daß die vorgenannten Energiespeichermitteln einen elektrochemischen Akkumulator (13) umfassen, der für die Speisung des Hilfsverstärkers (32) während eines längeren Versorgungsnetzausfalles dimensioniert ist.

8. Speisegerät nach einem der vorhergehenden Ansprüche, dadurch gekennzeichnet, daß der Verstärker-Wechselrichter (20) eine Leistungsstufe mit Transistoren der Funktionsklasse B aufweist.

9. Speisegerät nach Anspruch 8, dadurch gekennzeichnet, daß der Verstärker-Wechselrichter einen Transformator aufweist, der an den Ausgang der genannten Leistungsstufe angeschlossen ist.

10. Speisegerät nach Anspruch 9, dadurch gekennzeichnet, daß der genannte Transformator eine Primärwicklung (L₁) mit Zwischenabzweigung aufweist, die mit einer Leistungsstufe mit Transistoren vom Typ "Push-Pull" (Q₁, Q₂) verbunden ist.

11. Speisegerät nach Anspruch 8 oder 9, dadurch gekennzeichnet, daß der genannte Verstärker-Wechselrichter (20) eine Leistungsstufe mit Transistorbrücken der Funktionsklasse B aufweist (Figur 3).

12. Speisegerät nach Anspruch 1, dadurch gekennzeichnet, daß der Verstärker-Wechselrichter (20) eine Leistungsstufe mit Transistorbrücken der Funktionsklasse C aufweist.

13. Speisegerät nach einem der Ansprüche 3 bis 12, dadurch gekennzeichnet, daß es ein Mittel zur Vergrößerung der Amplitude des Steuersignales des Hilfsverstärkers bei einem Nachlassen des Versorgungsnetzes aufweist.

14. Elektrisches Speisegerät mit Wechselspannungsausgang nach Anspruch 7, dadurch gekennzeichnet, daß es eine Gleichrichterschaltung (40) aufweist, die an einen Wechselspannungsausgang (L₃) des Verstärkers-Wechselrichters (20) angeschlossen ist und mindestens einen Teil eines Auflademittels für einen elektrochemischen Akkumulator (13) bildet.

15. Elektrisches Speisegerät nach Anspruch 14, dadurch gekennzeichnet, daß es ein Mittel aufweist, das einen gesteuerten Unterbrecher bildet, dessen Steuerkreis (42) so geschaltet ist, daß er auf eine vom Versorgungsnetz gelieferte oder vom Versorgungsnetz abhängige Spannung anspricht, und daß das den Unterbrecher bildende Mittel an einem Punkt zwischengeschaltet ist, der zwischen dem Verstärker-Wechselrichter (20) und den Polen des genannten elektrochemischen Akkumulators liegt, um das Laden des letzteren zu unterbrechen, wenn die genannte Spannung unter eine vorgegebene Schwelle fällt.

16. Speisegerät nach Anspruch 15, dadurch gekennzeichnet, daß das den gesteuerten Unterbrecher bildenden Mittel ein elektromagnetisches Relais oder ein analoges Mittel ist, dessen Steuerwicklung (42) so geschaltet ist, daß sie von der Wechselspannung des Versorgungsnetzes oder von einer hierfür repräsentativen Spannung gespeist wird, und dessen Schaltkontakt (43) in Serie in die Verbindung zwischen den Wechselspannungsausgang ($L_3$) und die genannten Pole geschaltet ist.

17. Speisegerät nach einem der Ansprüche 14 bis 16, bei dem der Verstärker-Wechselrichter einen Transformator aufweist, der an den Ausgang einer Leistungsstufe mit Transistoren der Funktionklasse B geschaltet ist, dadurch gekennzeichnet, daß der vorgenannte Wechselspannungsausgang des Verstärker-Wechselrichters (20) aus den Anschlüssen einer besonderen Wicklung ($L_3$) eines Transformators des Verstärkers-Wechselrichters besteht.

*FIG.1*

*FIG.4a*

*FIG.4b*

FIG.2

FIG.3

FIG.5

EP 0 237 369 B1